# EUROPEAN PATENT APPLICATION

(11) **EP 4 832 545 A1**
(43) Date of publication of application: **28.10.2026**
(21) Application number: 23961756.6
(22) Date of filing: 18.12.2023
(51) Int. Cl.: H04W 24/02

(54) **COMMUNICATION METHOD AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN)
(74) Representative: Aldridge, Henry Alexander
(86) International application number: PCT/CN2023/139610
(87) International publication number: WO 2025/129409

(57) **Abstract**

The present application provides a communication method and device, and a storage medium. The method comprises: a terminal device receives configuration information sent by a network device, wherein the configuration information is used for instructing the terminal device to send channel state information (CSI); the terminal device performs CSI measurement on the basis of the configuration information, wherein the CSI comprises first CSI obtained by measurement based on the assumption of an artificial intelligence (AI) receiver and/or second CSI obtained by measurement based on the assumption of a non-AI receiver.

## Description

### TECHNICAL FIELD

Embodiments of the present application relate to the technical field of communication, and in particular to a communication method and device, and a storage medium.

### BACKGROUND

In the related art, a terminal device usually measures and reports channel state information (CSI) based on a non-Artificial Intelligence (AI) receiver assumption, and in such case, a network device is configured with a downlink transmission scheme corresponding to the non-AI receiver. However, a network device may also introduce a downlink transmission scheme corresponding to an AI receiver. In such case, how the terminal device measures the corresponding CSI is an urgent problem to be solved.

### SUMMARY

Embodiments of the present disclosure provide a communication method and device, and a storage medium.

A communication method according to an embodiment of the present disclosure includes the following operations.

A terminal device receives configuration information transmitted by the network device, and the configuration information is used to instruct the terminal device to transmit channel state information (CSI).

The terminal device performs CSI measurement based on the configuration information. The CSI includes a first CSI measured based on an artificial intelligence (AI) receiver assumption and/or a second CSI measured based on a non-AI receiver assumption.

A communication method according to an embodiment of the present disclosure includes the following operations.

A network device transmits configuration information to a terminal device. The configuration information is used to instruct the terminal device to transmit CSI.

The network device receives the CSI transmitted by the terminal device. The CSI includes a first CSI measured based on an AI receiver assumption and/or a second CSI measured based on a non-AI receiver assumption.

A terminal device according to an embodiment of the present disclosure includes a first communication unit and a measurement unit.

The first communication unit is configured to receive configuration information transmitted by a network device. The configuration information is used to instruct the terminal device to transmit CSI.

The measurement unit is configured to perform CSI measurement based on the configuration information. The CSI includes a first CSI measured based on an AI receiver assumption and/or a second CSI measured based on a non-AI receiver assumption.

A network device according to an embodiment of the present disclosure includes a second communication unit.

The second communication unit is configured to transmit configuration information to a terminal device. The configuration information is used to instruct the terminal device to transmit CSI.

The second communication unit is further configured to receive the CSI transmitted by the terminal device. The CSI includes a first CSI measured based on an AI receiver assumption and/or a second CSI measured based on a non-AI receiver assumption.

A communication device provided by the embodiments of the present disclosure may be the terminal device or the network device in the above schemes, and the communication device includes a processor and a memory. The memory is configured to store a computer program, and the processor is configured to invoke and execute the computer program stored in the memory to perform the communication method described above.

A chip provided by the embodiments of the present disclosure is used to implement the communication method described above.

Specifically, the chip includes a processor. The processor is configured to invoke and execute a computer program from a memory, to enable a device installed with the chip to perform the above communication method.

A computer-readable storage medium provided by the embodiments of the present disclosure is used for storing a computer program that enables a computer to perform the above communication method.

A computer program product provided by the embodiments of the present disclosure includes computer program instructions that enable a computer to perform the above communication method.

A computer program provided by the embodiments of the present disclosure enables a computer to perform the above communication method when run on the computer.

The embodiments of the present disclosure provide a communication method. A terminal device may receive configuration information transmitted by a network device, and the configuration information is used to instruct the terminal device to transmit CSI. The terminal device performs CSI measurement based on the configuration information, and the CSI includes a first CSI measured based on an AI receiver assumption and/or a second CSI measured based on a non-AI receiver assumption. In this way, when the first CSI is measured based on the AI receiver assumption and the second CSI is measured based on the non-AI receiver assumption, the terminal device can measure the first CSI and/or the second CSI, thereby improving the measurement accuracy of the CSI and facilitating to obtain the gain of the receiver.

### BRIEF DESCRIPTION OF THE DRAWINGS

The drawings described herein are adopted to provide a further understanding to the present disclosure and form a part of the present disclosure. Schematic embodiments of the present disclosure and descriptions thereof are adopted to explain the present disclosure and not intended to form improper limits to the present disclosure. In the drawings:
FIG. 1 is a schematic diagram of a communication architecture.
FIG. 2 is a schematic diagram of a CSI reporting mode of a terminal device.
FIG. 3 is a schematic diagram of a neuron structure.
FIG. 4 is a schematic diagram of a neural network structure.
FIG. 5 is a first schematic flowchart of a communication method according to an embodiment of the present disclosure.
FIG. 6 is a second schematic flowchart of a communication method according to an embodiment of the present disclosure.
FIG. 7 is a third schematic flowchart of a communication method according to an embodiment of the present disclosure.
FIG. 8 is a fourth schematic flowchart of a communication method according to an embodiment of the present disclosure.
FIG. 9 is a schematic diagram of structure and composition of a terminal device according to an embodiment of the present disclosure.
FIG. 10 is a schematic diagram of structure and composition of a network device according to an embodiment of the present disclosure.
FIG. 11 is a schematic structural diagram of a communication device according to an embodiment of the present disclosure.
FIG. 12 is a schematic structural diagram of a chip according to an embodiment of the present disclosure.
FIG. 13 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

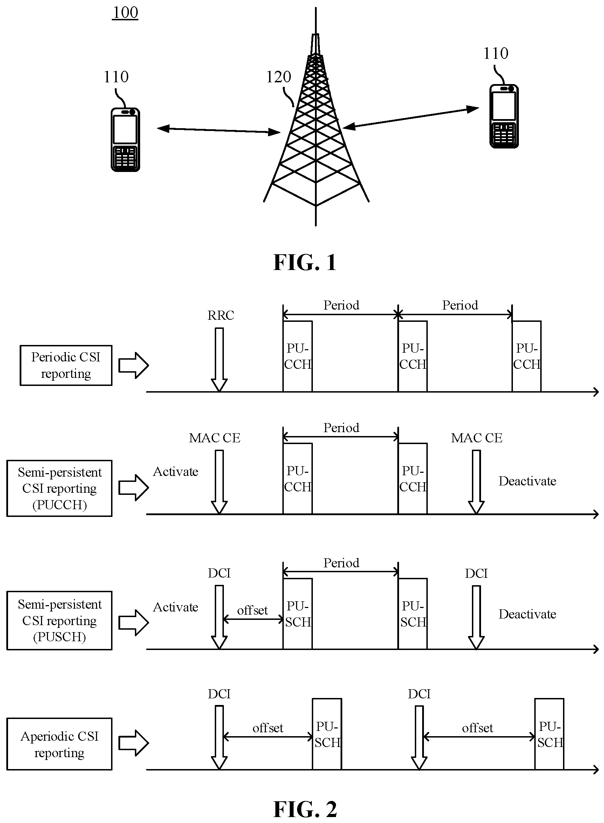

FIG. 1 is a schematic diagram of an application scenario to which an embodiment of the present disclosure is applied.

As illustrated in FIG. 1, the communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present disclosure are only exemplarily described with reference to the communication system 100, but the embodiments of the present disclosure are not limited thereto. That is, the technical solutions of the embodiments of the present disclosure may be applied to various communication systems, such as a Long Term Evolution (LTE) system, a LTE Time Division Duplex (TDD), an Universal Mobile Telecommunications System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with a terminal device 110 located within the coverage.

The network device 120 may be an Evolved Node B (eNB or eNodeB) in the LTE system, a Next Generation Radio Access Network (NG RAN) device, a base station (gNB) in the NR system, or a wireless controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN), etc.

The terminal device 110 may be any terminal device, which includes, but is not limited to, a terminal device connected to the network device 120 or another terminal device via a wired or wireless connection.

For example, the terminal device 110 may be referred to as an access terminal, a user equipment (UE), a subscriber unit, a subscriber station, a mobile station, a mobile radio station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network or a terminal device in a future evolution network, etc.

The terminal device 110 may be used for Device to Device (D2D) communication.

FIG. 1 exemplarily illustrates one network device and two terminal devices. In an embodiment, the communication system 100 may include a plurality of network devices and another number of terminal devices may be included within the coverage area of each network device, which is not limited in the embodiments of the present disclosure.

It should be noted that FIG. 1 merely exemplarily illustrates the system to which the present disclosure is applied, and of course, the method in the embodiments of the present disclosure may also be applied to other systems. Further, terms "system" and "network" in the present disclosure may usually be interchanged in the present disclosure.

"Some embodiments" involved in the following descriptions describes a subset of all possible embodiments. However, it is to be understood that "some embodiments" may be the same subset or different subsets of all the possible embodiments, and may be combined without conflicts.

It should also be pointed out that term "first/second/third" involved in the embodiments of the present disclosure is only for distinguishing similar objects, and does not represent a specific sequence of the objects. It is to be understood that "first/second/third" may be interchanged to specific sequences or orders if allowed to implement the embodiments of the present disclosure described herein in sequences except the illustrated or described ones.

In addition, the term "and/or" in the embodiments of the present disclosure is only an association relationship describing associated objects and represents three relationships. For example, A and/or B may represent the following three cases: independent existence of A, existence of both A and B, and independent existence of B. In addition, the character "/" in the present disclosure generally represents that previous and next associated objects form an "or" relationship.

It is to be understood that the term "indication" mentioned in the embodiments of the present disclosure may be a direct indication, an indirect indication, or an indication of an associated relationship. For example, an indication of B by A may indicate that A directly indicates B, for example, B is obtained through A, or that A indirectly indicates B, for example, A indicates C and B is obtained through C, or that there is an association between A and B.

It should be understood that the term "correspondence" in the embodiments of the present disclosure may indicate that there is a direct correspondence or indirect correspondence between two elements, or may indicate that there is an association relationship between the two elements, or may indicate a relationship between indicating and being indicated, or between configuring and being configured, etc.

It is also to be understood that "predefined", "agreed by protocol", "predetermined", or "predefined rule" mentioned in the embodiments of the present disclosure may be implemented by pre-storing the corresponding codes, tables, or other manners for indicating relevant information in the device (for example, a terminal device), and the specific implementations thereof are not limited in the present disclosure. For example, "predefined" may refer to those defined in a protocol. It is also to be understood that in the embodiments of the present disclosure, the "protocol" may refer to a standard protocol in the field of communication, which may include, for example, a Long Term Evolution (LTE) protocol, a New Radio (NR) protocol and relevant protocol applied in the future communication system, which is not limited in the present disclosure.

The technical solutions described in the embodiments of the present disclosure may be arbitrarily combined as long as there is no conflict. In the description of the present disclosure, "a plurality/multiple" means two or more unless specifically defined otherwise.

In order to facilitate understanding of the technical solutions of the embodiments of the present disclosure, the related technologies of the embodiments of the present disclosure will be described below. The following related technologies as alternative solutions can be arbitrarily combined with the technical solutions of the embodiments of the present disclosure, and shall fall within the scope of protection of the embodiments of the present disclosure.

In order for the network device to perform reasonable scheduling, the terminal device needs to report CSI, so that the network device can determine scheduling information of the terminal device including, such as the number of transmission layers, a precoding matrix, a transmission beam, and a modulation and coding method.

It is to be noted that CSI reporting by the terminal device may be performed based on CSI reporting configuration indicated by the network device, and uplink resources used by the terminal device to report the CSI and a downlink reference signal used for performing CSI measurement may be indicated by the CSI reporting configuration. Each CSI reporting configuration corresponds to one CSI reporting, and each CSI reporting may include different information such as a Channel State Information-Reference Signal Resource Indicator (CRI), a Rank Indicator (RI), a Precoding Matrix Indicator (PMI), a Channel Quality Indicator (CQI), or the like.

Further, the information included in the CSI reporting may be determined by report quantity information (ReportQuantity) in the CSI reporting configuration. The report quantity information may indicate one or more of the following.

The CRI is used to determine a CSI-RS resource currently used for channel measurement and an Interference Measurement Resource (IMR) currently used for interference measurement from a plurality of Channel State Information-Reference Signal (CSI-RS) resources.

The RI is used to report the recommended number of transmission layers.

The PMI is used to determine a recommended precoding matrix from a predefined codebook.

The CQI is used to report the current channel quality.

The Reference Signal Receiving Power (RSRP) is used for reporting the RSRP of the Synchronization Signal/PBCH Block (SSB) or CSI-RS corresponding to the fed index, to enable the network device side to determine the beam used for downlink transmission.

The Layer Indicator (LI) is used to report an index of a transmission layer associated with a Phase-Tracking Reference Signal (PTRS).

One or more of RI, PMI, and CQI may be determined based on a Signal to Interference Plus Noise Ratio (SINR) estimated by the terminal device. A channel portion of the SINR is determined based on a non-zero power CSI-RS configured by the network device for channel measurement, and an interference portion is determined based on a channel state information-interference measurement (CSI-IM) or non-zero power CSI-RS configured by the network device for interference measurement. The calculation for detecting the SINR may be generally based on a Minimum Mean Square Error (MMSE) receiver assumption or a Minimum Mean Square Error-Interference Rejection Combining (MMSE-IRC) receiver assumption. The CQI may be obtained by calculating the corresponding SINR based on the estimated RI and PMI.

FIG. 2 is a schematic diagram of a CSI reporting mode of a terminal device. As illustrated in FIG. 2, the CSI reporting mode of the terminal device may include periodic CSI reporting, semi-persistent CSI reporting, and aperiodic CSI reporting. These three CSI reporting modes are described below.

The periodic CSI may be transmitted on a Physical Uplink Control Channel (PUCCH), and the CSI reporting configuration thereof may be configured by Radio Resource Control (RRC) signaling. The terminal device may periodically report the CSI after receiving the corresponding RRC configuration.

The semi-persistent CSI may be transmitted on the PUCCH, and the CSI reporting configuration thereof is preconfigured by RRC signaling and activated or deactivated by Media Access Control Control Element (MAC CE) signaling. After receiving the activation or indication signaling configured by the network device, the terminal device periodically reports the CSI on the PUCCH until the terminal device receives the deactivation signaling and stops reporting the CSI.

The semi-persistent CSI may also be transmitted on a Physical Uplink Shared Channel (PUSCH), and the CSI reporting configuration thereof may be dynamically indicated (activated or deactivated) by Downlink Control Information (DCI) signaling. After receiving the activation or indication signaling configured by the network device and waiting for a certain offset, the terminal device may periodically report the CSI on the PUSCH until the terminal device receives the deactivation signaling and stops reporting.

The CSI reporting configuration corresponding to the aperiodic CSI reporting may also be pre-configured by RRC signaling: part of the configuration may be activated by MAC CE signaling, and then the CSI reporting configuration used for CSI reporting may be indicated by CSI triggering signaling in the DCI. After receiving the CSI triggering signaling and waiting for a certain offset, the terminal device may report the corresponding CSI in a single transmission on the scheduled PUSCH according to the indicated CSI reporting configuration.

An AI model is a model capable of handling multiple tasks, and has self-learning and self-adaptive capabilities, enabling dynamic adjustments and decision-making based on environmental changes. An AI model may also be referred to as a Machine Learning (ML) model, with the two terms being equivalent or interchangeable.

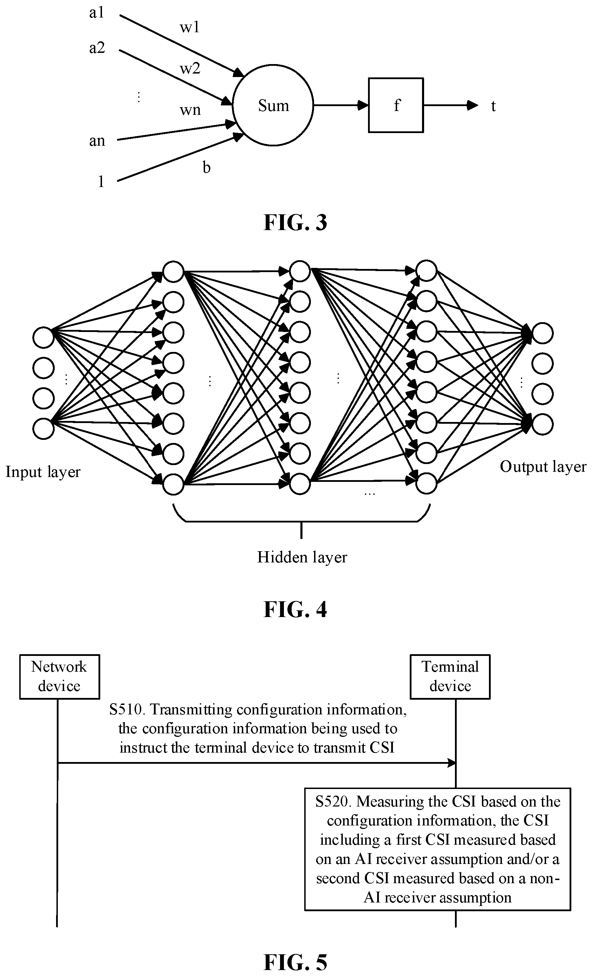

In practical applications, an AI model may be composed of neural networks. A neural network is an operation model composed of multiple neuron nodes connected to each other, where the connections between nodes represent weighted values (referred to as weights) from input signals to output signals. Each node performs weighted summation on different input signals and outputs the result through a specific activation function. FIG. 3 is a schematic diagram of a neuron structure, where a1, a2, ..., an and 1 are inputs to the neuron, w1, w2, ..., wn and b represent weights, Sum represents a summation function, f represents an activation function, and t is an output result.

A simple neural network, as illustrated in FIG. 4, includes an input layer, a hidden layer and an output layer. Through different connection modes, weights and activation functions of multiple neurons, different outputs may be generated to fit the mapping relationship from input to output. Each node in the upper level is connected to all nodes in the lower level. Such a fully-connected model may also be referred to as a Deep Neural Network (DNN).

An AI model may be trained and obtained through processes such as dataset construction, training, verification and testing. Training may be divided into offline training and online training. A network device may obtain a static training result through offline training with datasets, which may be referred to as offline training. During use of the AI model by the network device or terminal device, as the terminal device performs further measurements and/or reporting, the network device may continue to collect more data and perform real-time online training to optimize parameters of the AI model, to achieve better inference and prediction results. After the AI model is obtained, the corresponding model output can be inferred by inputting the currently obtained information into the AI model.

To realize different functions, different AI models may be introduced, with corresponding inputs and outputs being defined. Exemplarily, when an AI model is used for CSI feedback, channel information (such as feature vectors, beam information, delay information, etc.) measured based on the reference signal(s) may be used as input to the AI model, thereby inferring corresponding CSI quantization bits. The corresponding AI model at the network device side may take the CSI quantization bits as input to infer corresponding channel information.

For example, when an AI model is used for data detection, i.e., adopting an AI receiver assumption to detect downlink signals, the terminal device may use the received signal (and some additional information such as a pilot sequence) as input to the AI model for inference, thereby outputting the detected soft bit symbols (i.e., constellation points). In addition, AI models may also be used for other processes such as positioning, channel encoding, channel decoding, beam management, channel estimation, etc.

The terminal device usually performs CSI measurement and reporting based on a non-AI receiver assumption (such as MMSE receiver assumption). In such case, the network device is configured with a downlink transmission scheme corresponding to the non-AI receiver. However, if the terminal device adopts an AI receiver assumption, it is possible to obtain a higher SINR than under the non-AI receiver assumption, and in this case, if the terminal device still calculates the CSI based on the non-AI receiver assumption, it will lead to inaccurate CSI measurements, making it difficult to obtain the gain of the AI receiver. Therefore, when the network device introduces the downlink transmission scheme corresponding to the AI receiver, how the terminal device measures the corresponding CSI is an urgent problem to be solved.

Based on this, the embodiments of the present disclosure provide a communication method. A terminal device may receive configuration information transmitted by a network device, and the configuration information is used to instruct the terminal device to transmit CSI. The terminal device performs CSI measurement based on the configuration information, and the CSI includes a first CSI measured based on an AI receiver assumption and/or a second CSI measured based on a non-AI receiver assumption. In this way, when the first CSI is measured based on the AI receiver assumption and the second CSI is measured based on the non-AI receiver assumption, the terminal device can measure the first CSI and/or the second CSI, thereby improving the measurement accuracy of the CSI and facilitating to obtain the gain of the receiver.

In order to facilitate understanding of the technical solutions of the embodiments of the present disclosure, the technical solutions of the present disclosure will be described in detail below with reference to specific embodiments. The above related technologies as alternative solutions can be arbitrarily combined with the technical solutions of the embodiments of the present disclosure, and shall fall within the scope of protection of the embodiments of the present disclosure. The embodiments of the present disclosure include at least part of the following contents.

FIG. 5 is a schematic flowchart of a communication method according to an embodiment of the present disclosure. As illustrated in FIG. 5, the method may include the following operations.

In S510, a network device transmits configuration information to a terminal device, and the configuration information is used to instruct the terminal device to transmit CSI.

Correspondingly, the terminal device receives the configuration information transmitted by the network device.

It is to be noted that the configuration information may be CSI reporting configuration.

In some embodiments, the configuration information may be used to indicate information used for CSI reporting. For example, the configuration information may indicate a time-frequency resource(s) used for CSI reporting.

In S520, the terminal device measures the CSI based on the configuration information, and the CSI includes a first CSI measured based on an AI receiver assumption and/or a second CSI measured based on a non-AI receiver assumption.

In some embodiments, the terminal device may transmit the CSI to the network device.

Correspondingly, the network device may receive the CSI transmitted by the terminal device.

It is to be noted that the receiver assumption may be understood as a receiver assumed when the terminal device performs measurement. The receiver is used for the terminal device to receive signals. When the terminal device performs measurement, the terminal device does not need to actually use the receiver to receive the measured signal, and input information of the received signal to the assumed receiver, to simulate the reception situation during signal transmission by the assumed receiver.

The receiver includes an AI receiver and a non-AI receiver, and correspondingly, the receiver assumption includes an AI receiver assumption and a non-AI receiver assumption. The AI receiver assumption refers to an assumed AI receiver to measure signal reception under the AI receiver, and the non-AI receiver assumption refers to an assumed non-AI receiver to measure signal reception under the non-AI receiver.

The AI receiver assumption may be an AI receiver assumed by the terminal device, and the terminal device may measure the first CSI based on the assumed AI receiver, thereby directly outputting the first CSI. For example, the terminal device may measure the first CSI based on the first AI model used by the AI receiver assumption to obtain the first CSI.

The non-AI receiver assumption may be a non-AI receiver assumed by the terminal device, and the terminal device may measure the second CSI based on the assumed non-AI receiver, thereby directly outputting the second CSI.

It should be understood that after receiving the CSI transmitted by the terminal device, the network device may perform scheduling based on the CSI, so that a higher downlink transmission rate can be obtained.

Exemplarily, the operation that the network device performs scheduling based on the CSI may include: the network device adjusts one or more of the following based on the CSI: a Modulation and Coding Scheme (MCS), such as upgrading an MCS level; the number of transmission layers; and a precoding matrix.

It is to be noted that the first CSI or the second CSI may include information such as RI, PMI, and CQI.

It should also be noted that the measurement based on the AI receiver assumption may be a measurement based on the first AI model, that is, the terminal device assumes to adopt the first AI model as the AI receiver, and thus calculates the corresponding CSI. Different from linear receivers based on linear algorithms (such as MMSE, or MMSE-IRC), AI receivers are nonlinear receivers.

In some embodiments, the non-AI receiver assumption may include one or more of the following: an MMSE-IRC receiver assumption, an MMSE receiver assumption, and a maximum likelihood receiver assumption.

Exemplarily, the second CSI may be measured based on relevant protocols and implementation. For example, the second CSI may be measured based on an MMSE-IRC receiver assumption; for another example, the second CSI may be measured based on an MMSE receiver assumption; for another example, the second CSI may be measured based on a maximum likelihood receiver assumption.

In some embodiments, a rank corresponding to an RI included in the first CSI is less than a first threshold; and/or, the CQI included in the first CSI is less than a second threshold.

It is to be noted that there is an upper limit for the rank and/or modulation and coding scheme that the AI receiver can support, and within the upper limit range, the first CSI may be measured based on the AI receiver assumption. If the rank and/or modulation and coding scheme exceeds the rank and/or modulation and coding scheme that the AI receiver can support, the CSI measured by the terminal device is based on the non-AI receiver assumption.

Exemplarily, the first threshold may be predefined in the protocol, or may be indicated by the network device to the terminal device, which is not limited in the embodiments of the present disclosure.

Exemplarily, the second threshold may be predefined in the protocol, or may be indicated by the network device to the terminal device, which is not limited in the embodiments of the present disclosure.

By this method, the terminal device may measure the first CSI based on the AI receiver assumption, and the rank corresponding to the RI included in the first CSI is lower than a first threshold, and/or the CQI included in the first CSI is lower than the second threshold, so that the measurement accuracy of the first CSI can be improved, thereby facilitating to obtain the gain of the AI receiver.

In some embodiments, the rank corresponding to the RI included in the second CSI is not lower than a first threshold, and/or the CQI included in the second CSI is not lower than a second threshold, that is, the second CSI measured by the terminal device is based on a non-AI receiver assumption.

It should also be noted that in the embodiments of the present disclosure, "not less/lower than" can be understood as "greater than or equal to". For example, if the rank corresponding to the RI included in the second CSI is not less than the first threshold, it may be understood that the rank corresponding to the RI included in the second CSI is greater than or equal to the first threshold.

By this method, the terminal device may measure the second CSI based on the non-AI receiver assumption, and the rank corresponding to the RI included in the second CSI is not lower than a first threshold, and/or the CQI included in the second CSI is not lower than the second threshold, so that the measurement accuracy of the second CSI can be improved, thereby facilitating to obtain the gain of the non-AI receiver.

The synchronization scheme between the terminal device and the network device for the receiver assumption on which the CSI is based will be described below with reference to Mode # A, Mode # B, and Mode # C.

Mode # A: The network device configures the receiver assumption on which the CSI is based for the terminal device.

In some embodiments, the configuration information may include first information for indicating that the receiver assumption on which the CSI is based is an AI receiver assumption or a non-AI receiver assumption.

Exemplarily, the receiver assumption configured by the network device may be a receiver corresponding to a transmission scheme that the network device intends to configure to the terminal device.

For example, when the first information indicates that the receiver assumption on which the CSI is based is an AI receiver assumption, it may be considered that the transmission scheme to be configured subsequently by the network device corresponds to the AI receiver.

For another example, when the first information indicates that the receiver assumption on which the CSI is based is a non-AI receiver assumption, it may be considered that the transmission scheme to be configured subsequently by the network device corresponds to the non-AI receiver.

Further, when the first information indicates that the CSI is based on an AI receiver assumption, the CSI includes the first CSI; alternatively, when the first information indicates that the CSI is based on a non-AI receiver assumption, the CSI includes the second CSI.

Exemplarily, when the first information indicates that the CSI is based on an AI receiver assumption, the terminal device may perform measurement of the first CSI.

Exemplarily, when the first information indicates that the CSI is based on a non-AI receiver assumption, the terminal device may perform measurement of the second CSI.

According to this method, the network device can flexibly configure the receiver assumption on which the CSI is based, so that the subsequent network device can use downlink transmission schemes corresponding to different receivers to transmit downlink data, thereby improving the downlink transmission rate. For example, for an AI receiver, the network device may transmit downlink data in a data and pilot superposition transmission scheme. For another example, for a non-AI receiver, the network device may transmit downlink data in a data and pilot time-frequency multiplexing scheme.

Mode # B: The network device receives the receiver assumption reported by the terminal device.

In some embodiments, the terminal device may transmit second information to the network device, and the second information indicates that the receiver assumption on which the CSI is based is an AI receiver assumption or a non-AI receiver assumption.

Correspondingly, the network device may receive the second information transmitted by the terminal device.

Exemplarily, the receiver assumption transmitted by the terminal device to the network device may be a currently optimal receiver assumption.

For example, when the second information indicates that the receiver assumption on which the CSI is based is an AI receiver assumption, the AI receiver assumption may be considered to be the currently optimal receiver assumption.

For another example, when the second information indicates that the receiver assumption on which the CSI is based is a non-AI receiver assumption, the non-AI receiver assumption may be considered to be the currently optimal receiver assumption.

Further, when the second information indicates that the CSI is based on an AI receiver assumption, the CSI includes the first CSI; alternatively, when the second information indicates that the CSI is based on a non-AI receiver assumption, the CSI includes the second CSI.

Exemplarily, the terminal device performs measurement of the first CSI, and correspondingly, the second information may indicate that the first CSI is based on the AI receiver assumption.

Exemplarily, the terminal device performs measurement of the second CSI, and correspondingly, the second information may indicate that the second CSI is based on the non-AI receiver assumption.

According to this method, the terminal device can transmit the receiver assumption on which the CSI is based to the network device, and subsequently, after receiving the receiver assumption on which the CSI is based, the network device can perform downlink data transmission by adopting the downlink transmission scheme corresponding to the receiver, thereby improving the downlink transmission rate. For example, for an AI receiver, the network device may perform downlink data transmission in a data and pilot superposition transmission scheme. For another example, for a non-AI receiver, the network device may perform downlink data transmission in a data and pilot time-frequency multiplexing scheme.

Mode # C: The network device determines, based on the received CSI, a receiver assumption on which the CSI is based.

In some embodiments, when a rank corresponding to an RI included in the CSI is lower than a first threshold, and/or a CQI included in the CSI is lower than a second threshold, the CSI is measured based on an AI receiver assumption.

When the rank corresponding to the RI included in the CSI is not lower than the first threshold, and/or the CQI included in the CSI is not lower than the second threshold, the CSI is measured based on a non-AI receiver assumption.

That is, the network device may determine whether the receiver assumption on which the CSI is based is an AI receiver assumption or a non-AI receiver assumption based on the values of RI and/or CQI included in the CSI.

Exemplarily, the receiver assumption determined by the network device may be a currently optimal receiver assumption.

For example, when the network device determines the receiver assumption on which the CSI is based is an AI receiver assumption, the AI receiver assumption may be considered to be the currently optimal receiver assumption.

As another example, when the network device determines the receiver assumption on which the CSI is based is a non-AI receiver assumption, the non-AI receiver assumption may be considered to be the currently optimal receiver assumption.

Further, in case that the CSI includes the first CSI, the network device may determine that the first CSI is based on an AI receiver assumption; alternatively, in case that the CSI includes the second CSI, the network device may determine that the second CSI is based on a non-AI receiver assumption.

According to this method, the network device can determine the receiver assumptions on which the CSI is based by itself. In this way, the network device can adopt the downlink transmission scheme corresponding to the receiver to perform downlink data transmission, thereby improving the downlink transmission rate. For example, for an AI receiver, the network device may perform downlink data transmission in a data and pilot superposition transmission scheme. For another example, for a non-AI receiver, the network device may perform downlink data transmission in a data and pilot time-frequency multiplexing scheme.

In the embodiments of the present disclosure, the terminal device may autonomously determine whether the receiver assumption on which the CSI is based is an AI receiver assumption or a non-AI receiver assumption.

In some embodiments, the terminal device may measure the first CSI based on the AI receiver assumption and measure the second CSI based on the non-AI receiver assumption, and the terminal device may select an optimal CSI and a corresponding receiver assumption from the first CSI and the second CSI according to the measurement result.

Exemplarily, after the terminal device measures the first CSI based on the AI receiver assumption and measures the second CSI based on the non-AI receiver assumption, the terminal device may select the second CSI and corresponding non-AI receiver assumption. The second CSI is the optimal CSI.

Exemplarily, after the terminal device measures the first CSI based on the AI receiver assumption and measures the second CSI based on the non-AI receiver assumption, the terminal device may select the first CSI and corresponding AI receiver assumption. The first CSI is the optimal CSI.

According to this method, the terminal device can determine the receiver assumption on which the CSI is based by itself, and then, the terminal device can transmit the receiver assumption on which the CSI is based to the network device, so that after receiving the receiver assumption on which the CSI is based, the network device can perform downlink data transmission by adopting the downlink transmission scheme corresponding to the receiver, thereby improving the downlink transmission rate. For example, for an AI receiver, the network device may perform downlink data transmission in a data and pilot superposition transmission scheme. For another example, for a non-AI receiver, the network device may perform downlink data transmission in a data and pilot time-frequency multiplexing scheme.

In the embodiments of the present disclosure, the first CSI may be represented in the following two cases.

Case # 1: The first CSI may include the second CSI and a first offset value, and the first offset value may be measured based on an AI receiver assumption.

By this method, the terminal device may transmit the second CSI and the first offset value to the network device, and the network device may receive the second CSI and the first offset value. Since the terminal device simultaneously transmits the second CSI and the first offset value corresponding to the AI receiver, the network device can simultaneously obtain the CSI under the two receiver assumptions, and can perform scheduling more flexibly, thereby improving the downlink transmission rate.

Exemplarily, the network device performing scheduling based on the first CSI may include: the network device may further adjust one or more of the following according to the first offset value based on the scheduling result derived from the second CSI: an MCS, e.g., upgrading an MCS level; the number of transmission layers; and a precoding matrix.

In some embodiments, the first offset value may represent a SINR offset or a CQI offset between the first CSI and the second CSI, or the first offset value may represent a SINR offset or a CQI offset between the non-AI receiver and the AI receiver.

In some embodiments, the first offset value may be obtained by comparing the detected SINRs of the AI receiver and the non-AI receiver.

Exemplarily, the terminal device may use an AI receiver and a non-AI receiver to receive and detect the same downlink signal, and output respective detected SINRs. After multiple detections and statistics (e.g., multiple detections and averaging the respective output detected SINRs), the first offset value may be determined by comparing the respective final detected SINRs (e.g., the respective averaged detected SINRs).

For a non-AI receiver, the terminal device may calculate the detected SINR of each transmission layer based on the downlink channel information (channel covariance matrix) and the non-AI receiver assumption.

For an AI receiver, the terminal device may directly output the detected SINR from the AI receiver.

In other embodiments, the first offset value may be obtained by comparing a first curve representing detection performance of the AI receiver and a second curve representing detection performance of the non-AI receiver.

Exemplarily, the first curve may be a block error rate (BLER)-SINR curve of the AI receiver in various modulation and coding modes, and the second curve may be a BLER-SINR curve of the non-AI receiver in various modulation and coding modes. By comparing the BLER-SINR curves of the AI receiver and the non-AI receiver in various modulation and coding modes, the SINR offset value of the two receivers under a certain MCS may be identified, which is used as the first offset value under the MCS.

In some embodiments, the first offset value may be calculated separately for one or more of the following: a CQI in the second CSI; an MCS used for data transmission; a modulation mode used for data transmission; the number of transmission layers; and a transmission mode.

Exemplarily, different CQIs may correspond to different first offset values, and the terminal device may calculate different first offset values for different CQIs. Then, when the terminal device transmits the first offset value, the terminal device may transmit different first offset values for different CQIs.

Exemplarily, different MCSs used for data transmission may correspond to different first offset values, and the terminal device may calculate different first offset values for different MCSs used for data transmission. Then, when the terminal device transmits the first offset value, the terminal device may transmit different first offset values for different MCSs used for data transmission.

Exemplarily, different modulation modes used for data transmission may correspond to different first offset values, and the terminal device may calculate different first offset values for different modulation methods used for data transmission, so that when the terminal device transmits the first offset value, the terminal device may transmit different first offset values for different modulation methods used for data transmission. For example, the terminal device may transmit a first offset value for each supported modulation mode, and if the network device uses the modulation mode when performing scheduling, the network device may adjust the MCS based on the first offset value corresponding to the modulation mode.

Exemplarily, the number of transmission layers may be the number of transmission layers reported by the terminal device or the number of transmission layers used for data transmission. Different numbers of transmission layers may correspond to different first offset values, and the terminal device may calculate different first offset values for different numbers of transmission layers. Then, when the terminal device transmits the first offset value, the terminal device may transmit different first offset values for different numbers of transmission layers.

Exemplarily, different transmission modes may correspond to different first offset values, and the terminal device may calculate different first offset values for different transmission modes. Then, when the terminal device transmits the first offset value, the terminal device may transmit different first offset values for different transmission modes.

In some embodiments, the reporting period of the first offset value is greater than the reporting period of the second CSI.

It is to be noted that since the magnitude of the first offset value is associated with the first AI model adopted by the AI receiver, the terminal device may update the first offset value when updating the first AI model, and thus the first offset value does not need to be reported (i.e., transmitted) frequently. For example, the reporting of the first offset value may be triggered by the terminal device, and the terminal device may report the first offset value once after updating the first AI model.

According to this method, when the reporting period of the first offset value is greater than the reporting period of the second CSI, the terminal device does not need to frequently report the first offset value, thus reducing the signaling overhead.

Case # 2: The first CSI may be measured based on a first AI model, and the first AI model is a model for an AI receiver of the terminal device.

It is to be noted that the first AI model may be used for detection of data on the terminal device side, and may also output the detected SINR or directly output a CSI estimated based on the receiver and the received signal. In this way, two related functions of data detection and measurement are simultaneously realized by the first AI model, and thus the complexity of management and training of the first AI model is reduced.

According to this method, the terminal device can transmit the first CSI to the network device, so that after receiving the first CSI, the network device can perform scheduling based on the first CSI to improve the downlink transmission rate.

Exemplarily, the network device performing scheduling based on the first CSI may include: the network device adjusts one or more of the following based on the first CSI: an MCS, e.g., upgrading an MCS level; the number of transmission layers; and a precoding matrix.

The terminal device may acquire the first AI model in the following two possible implementations.

In some embodiments, the terminal device may train and maintain the first AI model by itself.

That is, the first AI model is determined by the terminal device itself. The terminal device may obtain a first AI model through training and maintain the first AI model.

In some embodiments, the configuration information may include third information for indicating a second AI model used in the AI receiver assumption.

Further, in some embodiments, the third information may indicate the second AI model to the terminal device by indicating a model ID or a model function of the second AI model.

The first AI model and the second AI model may be the same AI model. Alternatively, the first AI model and the second AI model may be different AI models.

That is, the network device may indicate the second AI model to the terminal device, and the terminal device may use the second AI model to measure the first CSI. The second AI model assumed/used by the terminal device when measuring the first CSI may be different from the first AI model used for detection.

The embodiments of the present disclosure provide a communication method. A terminal device may receive configuration information transmitted by a network device, and the configuration information is used to instruct the terminal device to transmit CSI. The terminal device performs CSI measurement based on the configuration information, and the CSI includes a first CSI measured based on an AI receiver assumption and/or a second CSI measured based on a non-AI receiver assumption. In this way, in case that the first CSI is measured based on the AI receiver assumption and the second CSI is measured based on the non-AI receiver assumption, the terminal device can perform measurement of the first CSI and/or the second CSI, thereby improving the measurement accuracy of the CSI and facilitating to obtain the gain of the receiver.

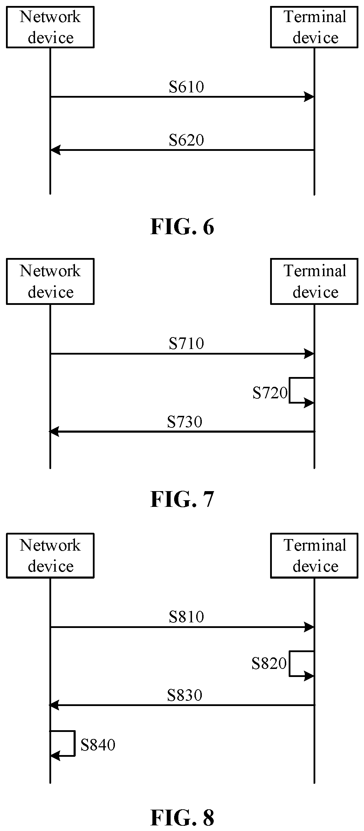

The technical solutions provided by the embodiments of the present disclosure will be further described in conjunction with the flow of the communication method illustrated in FIG. 6 to FIG. 8. It should be understood that the technical solutions provided by the embodiments of the present disclosure may include, but are not limited to, the following contents.

FIG. 6 is a second schematic flowchart of a communication method according to an embodiment of the present disclosure. As illustrated in FIG. 6, the method may include the following operations.

In S610, a network device transmits configuration information to a terminal device, and the configuration information is used to instruct the terminal device to transmit CSI. The configuration information includes first information for indicating that a receiver assumption on which the CSI is based is an AI receiver assumption or a non-AI receiver assumption.

In S620, when the first information indicates that the CSI is based on the AI receiver assumption, the terminal device measures and transmits a first CSI based on the configuration information, and the first CSI is measured based on the AI receiver assumption; or, when the first information indicates that the CSI is based on the non-AI receiver assumption, the terminal device measures and transmits a second CSI based on the configuration information, and the second CSI is measured based on the non-AI receiver assumption.

FIG. 7 is a third schematic flowchart of a communication method according to an embodiment of the present disclosure. As illustrated in FIG. 7, the method may include the following operations.

In S710, a network device transmits configuration information to a terminal device, and the configuration information is used to instruct the terminal device to transmit CSI.

In S720, the terminal device performs measurement of a first CSI and measurement of a second CSI based on the configuration information. The first CSI is measured based on an AI receiver assumption, and the second CSI is measured based on a non-AI receiver assumption.

In S730, the terminal device transmits an optimal CSI from the first CSI and the second CSI and second information to the network device. The second information is used to indicate that the receiver assumption on which the CSI is based is the AI receiver assumption or the non-AI receiver assumption.

FIG. 8 is a fourth schematic flowchart of a communication method according to an embodiment of the present disclosure. As illustrated in FIG. 8, the method may include the following operations.

In S810, a network device transmits configuration information to a terminal device, and the configuration information is used to instruct the terminal device to transmit CSI.

In S820, the terminal device performs measurement of a first CSI and measurement of a second CSI based on the configuration information. The first CSI is measured based on an AI receiver assumption, and the second CSI is measured based on a non-AI receiver assumption.

In S830, the terminal device transmits an optimal CSI from the first CSI and the second CSI to the network device.

In S840, when a rank corresponding to an RI included in the CSI is lower than the first threshold, and/or a CQI included in the CSI is lower than the second threshold, the network device determines that the CSI is measured based on the AI receiver assumption.

When the rank corresponding to the RI included in the CSI is not lower than the first threshold, and/or the CQI included in the CSI is not lower than the second threshold, the network device determines that the CSI is measured based on the non-AI receiver assumption.

The communication method provided by the embodiments of the present disclosure will be described below in detail with reference to specific application scenarios.

The embodiments of the present disclosure provide a CSI reporting method, in which a terminal device can perform SINR calculation and corresponding CSI reporting based on a receiver assumption, so that the network device can schedule a receiver-based downlink transmission scheme based on the CSI reported by the terminal device, and obtain a higher transmission rate.

Based on the two methods for the terminal device to obtain the receiver assumption on which the CSI is based, the technical solution provided by the embodiments of the present disclosure may mainly include the following two embodiments.

Embodiment 1: A network device configures a receiver assumption on which the CSI is based for a terminal device.
1. The network device transmits configuration information to the terminal device, and the configuration information is used to instruct the terminal device to report CSI.
2. The terminal device receives the configuration information transmitted by the network device, and the configuration information is used to instruct the terminal device to report CSI.
   (1) The configuration information may be CSI reporting configuration, and is used to indicate information used for CSI reporting.
   (2) The configuration information includes first information, and the first information is used to indicate whether the receiver assumption on which the CSI reporting is based is an AI receiver assumption or a non-AI receiver assumption (such as, an MMSE receiver assumption or a maximum likelihood receiver assumption). For example, the first information indicates that the receiver assumption on which the CSI reporting is based is an AI receiver assumption; or, the first information indicates that the receiver assumption on which the CSI reporting is based is a non-AI receiver assumption.
   (3) The AI receiver refers to the detection of downlink data based on the first AI model, that is, the terminal device may use the received signal (and some additional information such as a pilot sequence) as the input to the first AI model for inference, thereby outputting the detected soft bit symbols (i.e., constellation points), and then performing the subsequent demodulation process. Unlike linear receivers based on linear algorithms (such as MMSE or MMSE-IRC), AI receivers are non-linear receivers.
   The following description takes the case that the network device instructs to perform the first CSI reporting based on the AI receiver assumption as an example.
3. The terminal device measures and reports the first CSI based on the configuration information.
   (1) The CSI may include a first CSI, and the first CSI is measured based on an AI receiver assumption.
   (2) The first CSI may include a second CSI and a first offset value, where the first offset value is measured based on an AI receiver assumption. In the embodiments of the present disclosure, the first CSI and the second CSI contain similar information, for example, the first CSI or the second CSI may contain information such as RI, PMI, and CQI.
      a. In some embodiments, the first offset value may represent a SINR offset or a CQI offset between the first CSI and the second CSI; or, the first offset value may represent a SINR offset or a CQI offset between a non-AI receiver (e.g., a linear receiver) and an AI receiver.
      b. In some embodiments, when the network device schedules downlink transmission based on the AI receiver after receiving the first offset value, the network device may combine the first offset value on the basis of the scheduling result of the second CSI, thereby adjusting the MCS used for the downlink transmission. For example, if the network device schedules downlink transmissions based on a non-AI receiver, the network device may perform scheduling based on the second CSI (e.g., determining the number of transmission layers, precoding matrix, and MCS); if the network device schedules downlink transmission based on an AI receiver (for example, in a data and pilot superposition transmission mode), the network device may further adjust the MCS according to the first offset value (for example, upgrade the MCS level) on the basis of the scheduling result obtained based on the second CSI, thereby obtaining a higher transmission rate.
      c. In some embodiments, the first offset value may be obtained by comparing the detected SINRs of the AI receiver and the non-AI receiver. For example, the terminal device may use different receivers to receive and detect the same downlink signal, output respective detected SINRs, and determine the first offset value through multiple detections and statistics (for example, multiple measurements and averaging). For the non-AI receiver, the terminal device may calculate the detected SINR of each transmission layer based on the downlink channel information (channel covariance matrix) and the non-AI receiver assumption. For the AI receiver, the terminal device may directly output the detected SINR from the AI receiver.
      d. In other embodiments, the first offset value may be obtained by comparing the detection performance curves of the AI receiver and the non-AI receiver. For example, by comparing BLER-SINR curves of the AI receiver and the non-AI receiver in various modulation and coding modes, the SINR offset value of the two receivers in a certain MCS may be identified as the first offset value in the MCS.
      e. In some embodiments, the first offset value may be associated with a CQI in the second CSI, or the first offset value may be associated with a modulation mode corresponding to the CQI in the second CSI. That is, different CQI values may correspond to different first offset values, or different modulation modes may correspond to different offset values. When the terminal device reports the first offset value, the terminal device may report different first offset values for different CQI values or different modulation modes. For example, the terminal device reports a first offset value for each supported modulation mode, and if the network device uses this modulation mode to perform scheduling, the network device may adjust the MCS based on the first offset value.
      f. In other embodiments, the first offset value may also be reported separately for different numbers of transmission layers and/or different transmission modes. For example, the terminal device may report a first offset value for each Rank value, or, the terminal may report a first offset value for different transmission modes.
      g. In some embodiments, the reporting period of the first offset value may be longer than the reporting period of the second CSI. Since the magnitude of the first offset value is related to the first AI model adopted by the AI receiver, the terminal device may update the first offset value when updating the first AI model, and thus it is not necessary to frequently report the first offset value. For example, the reporting of the first offset value may be triggered by the terminal device, and the terminal device may report the first offset value once after updating the first AI model.
      h. In some embodiments, the second CSI may be measured based on a non-AI receiver assumption. For example, the second CSI is measured based on a linear receiver assumption; or, the second CSI is measured based on an MMSE receiver assumption. That is, the second CSI is reported based on the protocol and implementation measurement.
   (3) A Rank value corresponding to an RI included in the first CSI is lower than the first threshold, and/or a CQI included in the first CSI is lower than the second threshold.
      a. That is, there is an upper limit on the Rank value and modulation and coding mode that the AI receiver can support. Within the upper limit range, the reported CSI is measured based on the AI receiver assumption. The first threshold and the second threshold may be specified in advance in the protocol, or may be indicated to the terminal device by the network device.
      b. If the Rank value corresponding to the RI included in the CSI is not lower than the first threshold, and/or the CQI included in the CSI is not lower than the second threshold, the CSI is not measured based on the AI receiver assumption.
      c. Based on values of the RI and the CQI reported by the terminal device, the network device may determine whether the currently reported CSI is measured based on the AI receiver assumption or based on the non-AI receiver assumption, so that the network device may perform corresponding downlink scheduling based on the CSI.
4. The network device receives the CSI reported by the terminal device.

According to the technical solution of Embodiment 1, the network device can flexibly configure the receiver assumption on which the CSI reporting of the terminal device is based, thereby obtaining the CSI under different receiver assumptions for downlink scheduling, and improving the downlink transmission rate. In addition, the terminal device may report the second CSI and the first offset value corresponding to the AI receiver simultaneously, and the network device may obtain the CSI under the two receiver assumptions at the same time, thereby performing scheduling more flexibly.

Embodiment 2: A terminal device itself determines the receiver assumption on which the CSI is based.
1. A network device transmits configuration information to the terminal device, and the configuration information is used to instruct the terminal device to report CSI.
2. The terminal device receives the configuration information transmitted by the network device, and the configuration information is used to instruct the terminal device to report CSI.
3. The terminal device measures and reports CSI based on the configuration information.
   (1) The terminal device may report second information to the network device, and the second information is used to indicate whether the receiver assumption on which the reported CSI is based is an AI receiver assumption or a non-AI receiver assumption (such as an MMSE receiver assumption, or a maximum likelihood receiver assumption). For example, the second information is used to indicate that the receiver assumption on which the CSI reporting is based is an AI receiver assumption, or the second information is used to indicate that the receiver assumption on which the CSI reporting is based is a non-AI receiver assumption. The terminal device may calculate the CSI corresponding to the AI receiver assumption and the non-AI receiver assumption respectively, thereby reporting the optimal CSI and the corresponding receiver assumption to the network device. The network device may adopt the downlink transmission scheme corresponding to the receiver. For example, for an AI receiver, the network device may adopt a downlink transmission scheme in which data and pilot are superimposed and transmitted; for non-AI receivers, the network device may adopt a downlink transmission scheme in which data and pilot are time-frequency multiplexed.
   (2) When the receiver assumption reported by the terminal device is the non-AI receiver assumption, the terminal device reports the second CSI. When the receiver assumption reported by the terminal device is the AI receiver assumption, the terminal device reports the first CSI.
      a. The second CSI may be measured based on a non-AI receiver assumption. For example, the second CSI is measured based on a linear receiver assumption; or, the second CSI is measured based on an MMSE receiver assumption. That is, the second CSI is reported based on the protocol and implementation measurement.
      b. The first CSI may be measured and reported in two modes.

Mode 1: The first CSI includes the second CSI and a first offset value, where the first offset value is measured based on an AI receiver assumption. The first offset value may represent a SINR offset or a CQI offset between the first CSI and the second CSI; or, the first offset value may represent a SINR offset or a CQI offset between a non-AI receiver (e.g., a linear receiver) and an AI receiver. The detailed description of the first offset value may make reference to the description in Embodiment 1, which will not be elaborated here.

Mode 2: The first CSI may be directly measured based on the first AI model, and the first AI model is a model for the AI receiver of the terminal device. That is, the first AI model is used not only for detection of data on the terminal device side, but also outputs the detected SINR or directly outputs the first CSI estimated based on the AI receiver and the received signal. In this way, two related functions of data detection and measurement are simultaneously realized by the first AI model, and thus the complexity of management and training of the first AI model is reduced. The first AI model may be indicated to the terminal device by the network device, or may be trained and maintained by the terminal device itself.
c. The first CSI and the second CSI contain similar information content, for example, the first CSI or the second CSI may contain information such as RI, PMI, and CQI.
(3) In some embodiments, the second AI model adopted by the AI receiver assumption may be indicated to the terminal device by the network device. Exemplarily, the configuration information may include third information for indicating the second AI model used in the AI receiver assumption. The terminal device may measure and obtain the first CSI based on the second AI model. Further, the network device may indicate the second AI model to the terminal device by indicating the model ID or the model function of the AI model.
4. The network device receives the CSI reported by the terminal device.

According to the technical solution of Embodiment 2, the terminal device may report the recommended (i.e., the optimal) CSI and the receiver assumptions corresponding to the CSI to the network device according to the CSI calculated under different receiver assumptions. The network device can use the downlink transmission scheme corresponding to the receiver to perform downlink data transmission, thereby improving the downlink transmission rate.

In the embodiments of the present disclosure, the receiver assumption on which the CSI is based is configured by the network device or reported by the terminal device, so that the network device can adopt the CSI corresponding to the currently optimal receiver assumption for downlink scheduling. Exemplarily, compared to the method in which the second CSI is obtained based on a linear receiver assumption such as MMSE, the first CSI may be obtained by using the AI receiver assumption, to obtain a higher Rank/MCS based on the first CSI, thereby obtaining a higher downlink transmission rate.

The preferred implementations of the present disclosure have been described in detail above with reference to the accompanying drawings, but the present disclosure is not limited to the specific details in the above implementations. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present disclosure. For another example, various embodiments and/or technical features of the various embodiments in the present disclosure may be combined with the related art in any manner without conflict, and the resulting technical solutions shall also fall within the scope of protection of the present disclosure.

It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure.

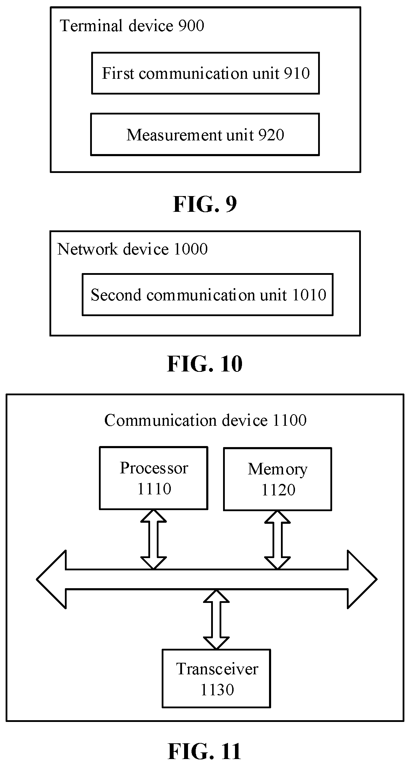

FIG. 9 is a schematic diagram of structure and composition of a terminal device according to an embodiment of the present disclosure. As illustrated in FIG. 9, the terminal device 900 may include a first communication unit 910 and a measurement unit 920.

The first communication unit 910 is configured to receive configuration information transmitted by a network device. The configuration information is used to instruct the terminal device to transmit channel state information (CSI).

The measurement unit 920 is configured to perform CSI measurement based on the configuration information. The CSI includes a first CSI measured based on an AI receiver assumption and/or a second CSI measured based on a non-AI receiver assumption.

In some embodiments, the configuration information includes first information for indicating that a receiver assumption on which the CSI is based is an AI receiver assumption or a non-AI receiver assumption.

In some embodiments, when the first information indicates that the CSI is based on an AI receiver assumption, the CSI includes the first CSI; or, when the first information indicates that the CSI is based on a non-AI receiver assumption, the CSI includes the second CSI.

In some embodiments, the first communication unit 910 is further configured to transmit second information to the network device. The second information is used to indicate that the receiver assumption on which the CSI is based is an AI receiver assumption or a non-AI receiver assumption.

In some embodiments, when the second information indicates that the CSI is based on an AI receiver assumption, the CSI includes the first CSI; or, when the second information indicates that the CSI is based on a non-AI receiver assumption, the CSI includes the second CSI.

In some embodiments, the first CSI includes the second CSI and a first offset value, and the first offset value is measured based on an AI receiver assumption.

In some embodiments, the first offset value represents a SINR offset or a CQI offset between the first CSI and the second CSI, or the first offset value represents a SINR offset or a CQI offset between a non-AI receiver and an AI receiver.

In some embodiments, the first offset value is obtained by comparing the detected SINRs of an AI receiver and a non-AI receiver; or, the first offset value is obtained by comparing a first curve and a second curve, where the first curve represents detection performance of the AI receiver, and the second curve represents detection performance of the non-AI receiver.

In some embodiments, the first offset value is calculated for one or more of: a CQI in the second CSI; an MCS used for data transmission; a modulation mode used for the data transmission; the number of transmission layers; and a transmission mode.

In some embodiments, a reporting period of the first offset value is greater than a reporting period of the second CSI.

In some embodiments, the first CSI is measured based on a first AI model, and the first AI model is a model for an AI receiver of the terminal device.

In some embodiments, the configuration information includes third information for indicating a second AI model used in the AI receiver assumption.

In some embodiments, a rank corresponding to an RI included in the first CSI is less than a first threshold; and/or a CQI included in the first CSI is less than a second threshold.

In some embodiments, when a rank corresponding to an RI included in the CSI is less than the first threshold, and/or a CQI included in the CSI is less than the second threshold, the CSI is measured based on an AI receiver assumption.

When the rank corresponding to the RI included in the CSI is not less than the first threshold, and/or the CQI included in the CSI is not less than the second threshold, the CSI is measured based on a non-AI receiver assumption.

In some embodiments, the non-AI receiver assumption includes a minimum mean square error (MMSE) receiver assumption and/or a maximum likelihood receiver assumption.

The embodiments of the present disclosure provide a terminal device. The terminal device may receive configuration information from a network device, and the configuration information is used to instruct the terminal device to transmit CSI. The terminal device measures CSI based on the configuration information, and the CSI includes a first CSI measured based on an AI receiver assumption and/or a second CSI measured based on a non-AI receiver assumption. In this way, when the first CSI is measured based on the AI receiver assumption and the second CSI is measured based on the non-AI receiver assumption, the terminal device can measure the first CSI and/or the second CSI, thereby improving the measurement accuracy of the CSI and facilitating to obtain the gain of the receiver.

Those skilled in the art should understand that the related description of the above terminal device according to the embodiments of the present disclosure may be understood with reference to the related description of the communication method according to the embodiments of the present disclosure.

FIG. 10 is a schematic diagram of structure and composition of a network device according to an embodiment of the present disclosure. As illustrated in FIG. 10, the network device 1000 may include a second communication unit 1010.

The second communication unit 1010 is configured to transmit configuration information to a terminal device. The configuration information is used to instruct the terminal device to transmit CSI.

The second communication unit 1010 is further configured to receive the CSI transmitted by the terminal device. The CSI includes a first CSI measured based on an AI receiver assumption and/or a second CSI measured based on a non-AI receiver assumption.

In some embodiments, the configuration information includes first information for indicating that a receiver assumption on which the CSI is based is an AI receiver assumption or a non-AI receiver assumption.

In some embodiments, when the first information indicates that the CSI is based on an AI receiver assumption, the CSI includes the first CSI; or, when the first information indicates that the CSI is based on a non-AI receiver assumption, the CSI includes the second CSI.

In some embodiments, the second communication unit 1010 is further configured to receive second information transmitted by the terminal device. The second information is used to indicate that a receiver assumption on which the CSI is based is an AI receiver assumption or a non-AI receiver assumption.

In some embodiments, when the second information indicates that the CSI is based on an AI receiver assumption, the CSI includes the first CSI; or, when the second information indicates that the CSI is based on a non-AI receiver assumption, the CSI includes the second CSI.

In some embodiments, the first CSI includes the second CSI and a first offset value, and the first offset value is measured based on an AI receiver assumption.

In some embodiments, the first offset value represents a signal-to-interference-to-noise ratio (SINR) offset or a channel quality indication (CQI) offset between the first CSI and the second CSI, or the first offset value represents a SINR offset or a CQI offset between a non-AI receiver and an AI receiver.

In some embodiments, the first offset value is obtained by comparing the detected SINRs of an AI receiver and a non-AI receiver; or, the first offset value is obtained by comparing a first curve and a second curve, where the first curve represents detection performance of the AI receiver, and the second curve represents detection performance of the non-AI receiver.

In some embodiments, the first offset value is calculated for one or more of: a CQI in the second CSI; an MCS used for data transmission; a modulation mode used for the data transmission; the number of transmission layers; and a transmission mode.

In some embodiments, a reporting period of the first offset value is greater than a reporting period of the second CSI.

In some embodiments, the first CSI is measured based on a first AI model, and the first AI model is a model for an AI receiver of the terminal device.

In some embodiments, the configuration information includes third information for indicating a second AI model used in the AI receiver assumption.

In some embodiments, a rank corresponding to an RI included in the first CSI is less than a first threshold; and/or a CQI included in the first CSI is less than a second threshold.

In some embodiments, when a rank corresponding to an RI included in the CSI is less than the first threshold, and/or a CQI included in the CSI is less than the second threshold, the CSI is measured based on an AI receiver assumption.

When the rank corresponding to the RI included in the CSI is not less than the first threshold, and/or the CQI included in the CSI is not less than the second threshold, the CSI is measured based on a non-AI receiver assumption.

In some embodiments, the non-AI receiver assumption includes a minimum mean square error (MMSE) receiver assumption and/or a maximum likelihood receiver assumption.

The embodiments of the present disclosure provide a network device. The network device may transmit configuration information to a terminal device, and the configuration information is used to instruct the terminal device to transmit CSI. The network device may receive the CSI transmitted by the terminal device, and the CSI includes a first CSI measured based on an AI receiver assumption and/or a second CSI measured based on a non-AI receiver assumption. In this way, when the first CSI is measured based on the AI receiver assumption and the second CSI is measured based on the non-AI receiver assumption, the network device may receive the first CSI and/or the second CSI, thereby enabling scheduling based on the first CSI and/or the second CSI to improve the rate of downlink transmission.

Those skilled in the art should understand that the related description of the above network device according to the embodiments of the present disclosure may be understood with reference to the related description of the communication method according to the embodiments of the present disclosure.

FIG. 11 is a schematic structural diagram of a communication device according to an embodiment of the present disclosure. The communication device 1100 may be a terminal device or a network device. The communication device 1100 illustrated in FIG. 11 includes a processor 1110. The processor 1110 may invoke and execute a computer program from a memory to implement the methods in the embodiments of the present disclosure.

In some embodiments, as illustrated in FIG. 11, the communication device 1100 may further include a memory 1120. The processor 1110 may invoke and execute a computer program from the memory 1120 to implement the methods in the embodiments of the present disclosure.

The memory 1120 may be a separate device independent of the processor 1110, or may be integrated in the processor 1110.

In some embodiments, as illustrated in FIG. 11, the communication device 1100 may further include a transceiver 1130. The processor 1110 may control the transceiver 1130 to communicate with other devices, in particular, to send information or data to other devices, or receive information or data sent by other devices.

The transceiver 1130 may include a transmitter and a receiver. The transceiver 1130 may further include an antenna(s), the number of which may be one or more.

In some embodiments, the communication device 1100 may be a terminal device in the embodiments of the present disclosure, and the communication device 1100 may implement corresponding processes implemented by the terminal device in each method of the embodiments of the present disclosure, which will not be elaborated herein for simplicity.

In some embodiments, the communication device 1100 may be a network device in the embodiments of the present disclosure, and the communication device 1100 may implement corresponding processes implemented by the network device in each method of the embodiments of the present disclosure, which will not be elaborated herein for simplicity.

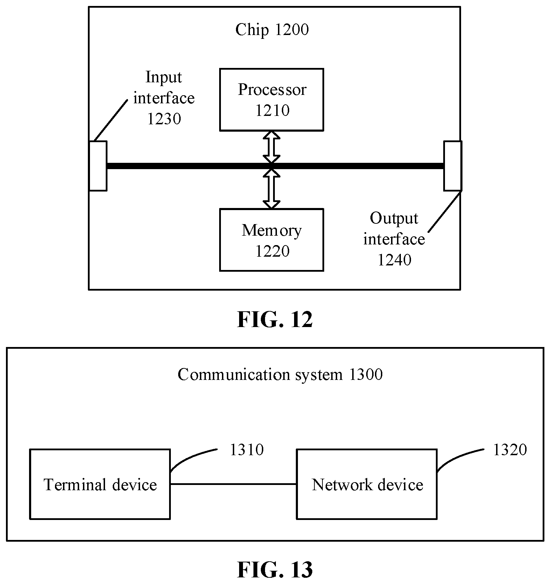

FIG. 12 is a schematic structural diagram of a chip according to an embodiment of the present disclosure. The chip 1200 illustrated in FIG. 12 includes a processor 1210. The processor 1210 may invoke and execute a computer program from a memory to implement the methods in the embodiments of the present disclosure.

In some embodiments, as illustrated in FIG. 12, the chip 1200 may further include a memory 1220. The processor 1210 may invoke and execute a computer program from the memory 1220 to implement the methods in the embodiments of the present disclosure.

The memory 1220 may be a separate device independent of the processor 1210, or may be integrated in the processor 1210.

In some embodiments, the chip 1200 may further include an input interface 1230. The processor 1210 may control the input interface 1230 to communicate with other devices or chips, and in particular may obtain information or data sent by other devices or chips.

In some embodiments, the chip 1200 may further include an output interface 1240. The processor 1210 may control the output interface 1240 to communicate with other devices or chips, and in particular may output information or data to other devices or chips.

In some embodiments, the chip may be applied to the terminal device in the embodiments of the present disclosure, and the chip may implement the corresponding processes implemented by the terminal device in each method of the embodiments of the disclosure, which will not be elaborated herein for simplicity.

In some embodiments, the chip may be applied to the network device in the embodiments of the present disclosure, and the chip may implement the corresponding processes implemented by the network device in each method of the embodiments of the disclosure, which will not be elaborated herein for simplicity.

It should be understood that the chip mentioned in the embodiments of the present disclosure may also be referred to as a system-level chip, a system chip, a chip system, a system-on-chip, or the like.

FIG. 13 is a schematic block diagram of a communication system according to an embodiment of the present disclosure. As illustrated in FIG. 13, the communication system 1300 includes a terminal device 1310 and a network device 1320.

The terminal device 1310 may be configured to implement the corresponding functions implemented by the terminal device in the above methods, and the network device 1320 may be configured to implement the corresponding functions implemented by the network device in the above methods, which will not be elaborated herein for simplicity.

It is to be understood that in the embodiments of the present disclosure, the processor may be an integrated circuit chip and has a signal processing capability. During an implementation process, each operation in the above method embodiments may be completed via an integrated logic circuit of hardware in the processor or an instruction in a software form. The processor may be a universal processor, a Digital Signal Processor (DSP), an Application Specific Integrated Circuit (ASIC) and a Field Programmable Gate Array (FPGA) or other programmable logic devices, discrete gates or transistor logic devices, and discrete hardware component. Each method, operation and logic block diagram disclosed in the embodiments of the disclosure may be implemented or executed. The universal processor may be a microprocessor or the processor may also be any conventional processor and the like. The operations of the methods disclosed in combination with the embodiments of the disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include but not limited to memories of these and any other proper types.

The embodiments of the present disclosure further provide a computer-readable storage medium, which is configured to store a computer program.

In some embodiments, the computer-readable storage medium may be applied to the terminal device in the embodiments of the disclosure. The computer program enables a computer to execute corresponding processes implemented by the terminal device in each method of the embodiments of the disclosure, which will not be elaborated here for simplicity.

In some embodiments, the computer-readable storage medium may be applied to the network device in the embodiments of the disclosure. The computer program enables a computer to execute corresponding processes implemented by the network device in each method of the embodiments of the disclosure, which will not be elaborated here for simplicity.

The embodiments of the present disclosure further provide a computer program product, which includes computer program instructions.

In some embodiments, the computer program product may be applied to the terminal device in the embodiments of the disclosure. The computer program enables a computer to execute corresponding processes implemented by the terminal device in each method of the embodiments of the disclosure, which will not be elaborated here for simplicity.

In some embodiments, the computer program product may be applied to the network device in the embodiments of the disclosure. The computer program enables a computer to execute corresponding processes implemented by the network device in each method of the embodiments of the disclosure, which will not be elaborated here for simplicity.

The embodiments of the present disclosure further provide a computer program.

In some embodiments, the computer program may be applied to the terminal device in the embodiments of the disclosure. The computer program, when run on a computer, enables the computer to execute corresponding processes implemented by the terminal device in each method of the embodiments of the disclosure, which will not be elaborated herein for simplicity.

In some embodiments, the computer program may be applied to the network device in the embodiments of the disclosure. The computer program, when run on a computer, enables the computer to execute corresponding processes implemented by the network device in each method of the embodiments of the disclosure, which will not be elaborated herein for simplicity.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiments described above are only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the present disclosure substantially or parts making contributions to the related art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A communication method, comprising:
receiving, by a terminal device, configuration information transmitted by a network device, wherein the configuration information is used to instruct the terminal device to transmit channel state information (CSI); and
performing CSI measurement based on the configuration information, wherein the CSI comprises a first CSI measured based on an artificial intelligence (AI) receiver assumption and/or a second CSI measured based on a non-AI receiver assumption.

2. The method of claim 1, wherein the configuration information comprises first information for indicating that a receiver assumption on which the CSI is based is the AI receiver assumption or the non-AI receiver assumption.

3. The method of claim 2, wherein
in case the first information indicates that the CSI is based on the AI receiver assumption, the CSI comprises the first CSI; or
in case the first information indicates that the CSI is based on the non-AI receiver assumption, the CSI comprises the second CSI.

4. The method of claim 1, further comprising:
transmitting, by the terminal device, second information to the network device, wherein the second information is used to indicate that a receiver assumption on which the CSI is based is the AI receiver assumption or the non-AI receiver assumption.

5. The method of claim 4, wherein
in case the second information indicates that the CSI is based on the AI receiver assumption, the CSI comprises the first CSI; or
in case the second information indicates that the CSI is based on the non-AI receiver assumption, the CSI comprises the second CSI.

6. The method of any one of claims 1 to 5, wherein the first CSI comprises the second CSI and a first offset value measured based on the AI receiver assumption.

7. The method of claim 6, wherein the first offset value represents a signal to interference plus noise ratio (SINR) offset or a channel quality indicator (CQI) offset between the first CSI and the second CSI, or the first offset value represents a SINR offset or a CQI offset between a non-AI receiver and an AI receiver.

8. The method of claim 6 or 7, wherein
the first offset value is obtained by comparing detected SINRs of an AI receiver and a non-AI receiver; or
the first offset value is obtained by comparing a first curve and a second curve, wherein the first curve represents detection performance of the AI receiver, and the second curve represents detection performance of the non-AI receiver.

9. The method of any one of claims 6 to 8, wherein the first offset value is calculated for one or more of:
a CQI in the second CSI;
a modulation and coding scheme (MCS) used for data transmission;
a modulation mode used for the data transmission;
a number of transmission layers; and
a transmission mode.

10. The method of any one of claims 6 to 9, wherein a reporting period of the first offset value is greater than a reporting period of the second CSI.

11. The method of any one of claims 1 to 5, wherein the first CSI is measured based on a first AI model, and the first AI model is a model for an AI receiver of the terminal device.

12. The method of any one of claims 1 to 11, wherein the configuration information comprises third information for indicating a second AI model used in the AI receiver assumption.

13. The method of any one of claims 1 to 12, wherein a rank corresponding to a rank indicator (RI) included in the first CSI is less than a first threshold; and/or, a CQI included in the first CSI is less than a second threshold.

14. The method of any one of claims 1, 6 to 13, wherein
in case that a rank corresponding to an RI included in the CSI is less than a first threshold, and/or a CQI included in the CSI is less than a second threshold, the CSI is measured based on the AI receiver assumption;
in case that the rank corresponding to the RI included in the CSI is not less than the first threshold, and/or the CQI included in the CSI is not less than the second threshold, the CSI is measured based on the non-AI receiver assumption.

15. The method of any one of claims 1 to 14, wherein the non-AI receiver assumption comprises a minimum mean square error (MMSE) receiver assumption and/or a maximum likelihood receiver assumption.

16. A communication method, comprising:
transmitting, by a network device, configuration information to a terminal device, wherein the configuration information is used to instruct the terminal device to transmit channel state information (CSI);
receiving, by the network device, the CSI transmitted by the terminal device, wherein the CSI comprises a first CSI measured based on an artificial intelligence (AI) receiver assumption and/or a second CSI measured based on a non-AI receiver assumption.

17. The method of claim 16, wherein the configuration information includes first information for indicating that a receiver assumption on which the CSI is based is the AI receiver assumption or the non-AI receiver assumption.

18. The method of claim 17, wherein
in case the first information indicates that the CSI is based on the AI receiver assumption, the CSI comprises the first CSI; or
in case the first information indicates that the CSI is based on the non-AI receiver assumption, the CSI comprises the second CSI.

19. The method of claim 16, further comprising:
receiving, by the network device, second information transmitted by the terminal device, wherein the second information is used to indicate that a receiver assumption on which the CSI is based is the AI receiver assumption or the non-AI receiver assumption.

20. The method of claim 19, wherein
in case the second information indicates that the CSI is based on the AI receiver assumption, the CSI comprises the first CSI; or
in case the second information indicates that the CSI is based on the non-AI receiver assumption, the CSI comprises the second CSI.

21. The method of any one of claims 16 to 20, wherein the first CSI comprises the second CSI and a first offset value measured based on the AI receiver assumption.

22. The method of claim 21, wherein the first offset value represents a signal to interference plus noise ratio (SINR) offset or a channel quality indicator (CQI) offset between the first CSI and the second CSI, or the first offset value represents a SINR offset or a CQI offset between a non-AI receiver and an AI receiver.

23. The method of claim 21 or 22, wherein,
the first offset value is obtained by comparing detected SINRs of an AI receiver and a non-AI receiver; or
the first offset value is obtained by comparing a first curve and a second curve, wherein the first curve represents detection performance of the AI receiver, and the second curve represents detection performance of the non-AI receiver.

24. The method of any one of claims 21 to 23, wherein the first offset value is calculated for one or more of:
a CQI in the second CSI;
a modulation and coding scheme (MCS) used for data transmission;
a modulation mode used for the data transmission;
a number of transmission layers; and
a transmission mode.

25. The method of any one of claims 21 to 24, wherein a reporting period of the first offset value is greater than a reporting period of the second CSI.

26. The method of any one of claims 16 to 20, wherein the first CSI is measured based on a first AI model, and the first AI model is a model for an AI receiver of the terminal device.

27. The method of any one of claims 16 to 26, wherein the configuration information comprises third information for indicating a second AI model used in the AI receiver assumption.

28. The method of any one of claims 16 to 27, wherein a rank corresponding to a rank indicator (RI) included in the first CSI is less than a first threshold; and/or, a CQI included in the first CSI is less than a second threshold.

29. The method of any one of claims 16, 21 to 28, wherein
in case that a rank corresponding to an RI included in the CSI is less than a first threshold, and/or a CQI included in the CSI is less than a second threshold, the CSI is measured based on the AI receiver assumption;
in case that the rank corresponding to the RI included in the CSI is not less than the first threshold, and/or the CQI included in the CSI is not less than the second threshold, the CSI is measured based on the non-AI receiver assumption.

30. The method of any one of claims 16 to 29, wherein the non-AI receiver assumption comprises a minimum mean square error (MMSE) receiver assumption and/or a maximum likelihood receiver assumption.

31. A terminal device, comprising:
a first communication unit, configured to receive configuration information transmitted by a network device, wherein the configuration information is used to instruct the terminal device to transmit channel state information (CSI); and
a measurement unit, configured to perform CSI measurement based on the configuration information, wherein the CSI comprises a first CSI measured based on an artificial intelligence (AI) receiver assumption and/or a second CSI measured based on a non-AI receiver assumption.

32. A network device, comprising:
a second communication unit, configured to transmit configuration information to a terminal device, wherein the configuration information is used to instruct the terminal device to transmit channel state information (CSI);
wherein the second communication unit is further configured to receive the CSI transmitted by the terminal device, wherein the CSI comprises a first CSI measured based on an artificial intelligence (AI) receiver assumption and/or a second CSI measured based on a non-AI receiver assumption.

33. A terminal device, comprising: a processor and a memory for storing a computer program, wherein the processor is configured to invoke and execute the computer program stored in the memory to perform the method of any of claims 1 to 15.

34. A network device, comprising: a processor and a memory for storing a computer program, wherein the processor is configured to invoke and execute the computer program stored in the memory to perform the method of any of claims 16 to 30.

35. A chip, comprising: a processor, configured to invoke and execute a computer program from a memory, to enable a device installed with the chip to perform the method of any of claims 1 to 15, or perform the method of any of claims 16 to 30.

36. A computer-readable storage medium for storing a computer program, execution of the computer program enabling a computer to perform the method of any of claims 1 to 15, or perform the method of any of claims 16 to 30.

37. A computer program product comprising computer program instructions, execution of the computer program instructions enabling a computer to perform the method of any of claims 1 to 15, or perform the method of any of claims 16 to 30.

38. A computer program, execution of the computer program enabling a computer to perform the method of any of claims 1 to 15, or perform the method of any of claims 16 to 30.
